# EUROPEAN PATENT SPECIFICATION

(11) **EP 3 099 530 B1**
(45) Date of publication and mention of the grant of the patent: **31.10.2018**
(21) Application number: 15701172.7
(22) Date of filing: 21.01.2015
(51) Int. Cl.: B60R 3/00

(54) **A VEHICLE STEP APPARATUS**
FAHRZEUGSTUFENVORRICHTUNG
APPAREIL MARCHEPIED DE VÉHICULE

(30) Priority: 30.01.2014 EP 14153211
(43) Date of publication of application: 07.12.2016
(73) Proprietor: Brady, Thomas Finbarr, County Cork (IE)
(72) Inventor: Brady, Thomas Finbarr, County Cork (IE)
(74) Representative: Weldon, Michael James
(86) International application number: PCT/EP2015/051098
(87) International publication number: WO 2015/113877

(56) References cited:
- GB-A- 2 248 814
- US-A1- 2011 285 104
- US-A1- 2013 270 791

## Description

### Introduction

The invention relates to a step apparatus for a vehicle.

US7661693, US2012/0313343, and US2004/0032112 describe tow hitches for vehicles. They provide a step for easy access to vehicles. US2011/0285104 discloses a step apparatus according to the preamble of claim 1. However a problem is that the user needs to provide a dedicated tow hitch, which may involve changing an existing hitch in order to provide a step.

The invention addresses this problem.

### Summary of the Invention

According to the invention, there is provided a step apparatus as set out in claim 1.

Preferably, said plate extends laterally across the platform. In one embodiment, said plate is located approximately mid-way between a front edge of the platform and a rear edge of the platform. In one embodiment, said socket to receive a hitch ball is forwardly of said plate. In one embodiment, the bracket has a top surface which is tapered to form a cradle shape suitable to engage the lower surface of a hitch ball. Preferably, said surface extends laterally inwardly and downwardly, and adjoins a vertical surface suitable for contacting a neck of a hitch ball.

In one embodiment, the bracket is U-shaped with open ends, and there are holes extending through the open ends of said U-shaped bracket for receiving locking pins. In one embodiment, said holes extend at an angle to the plane of the platform whereby the locking pins do not occupy space between the free ends in use.

In one embodiment, the bracket comprises a bracket body and adjustment elements arranged to move laterally from the bracket body to narrow or widen the distance between opposed sides of the bracket. In one embodiment, the adjustment elements comprise grub screws or bolts engaged in the bracket body.

In one embodiment, the fastener further comprises a bolt for tightening against a hitch. In one embodiment, the fastener comprises a vertical plate through which the bolt extends. In one embodiment, the platform has a generally convex shape facing rearwardly. In one embodiment, the platform is of general oval shape in plan view.

In one embodiment, the platform has a raised border. In one embodiment, the platform is configured to accommodate both feet of a person standing.

### Detailed Description of the Invention

The invention will be more clearly understood from the following description of some embodiments thereof, given by way of example only with reference to the accompanying drawings in which:-
Fig. 1 is a top perspective view of a step apparatus of the invention, and Fig. 2 is an underneath perspective view of the apparatus;
Figs. 3 and 4 are side views showing how the apparatus is placed on an existing vehicle hitch, and Figs. 5 and 6 are perspective views showing how the attachment is completed;
Fig. 7 is a perspective cut-away view showing the attachment, and Fig. 8 is a cross-sectional view through a vertical plane showing the attachment; and
Fig. 9(a) is a plan view and Fig. 9(b) is a perspective view of a bracket of an alternative apparatus.

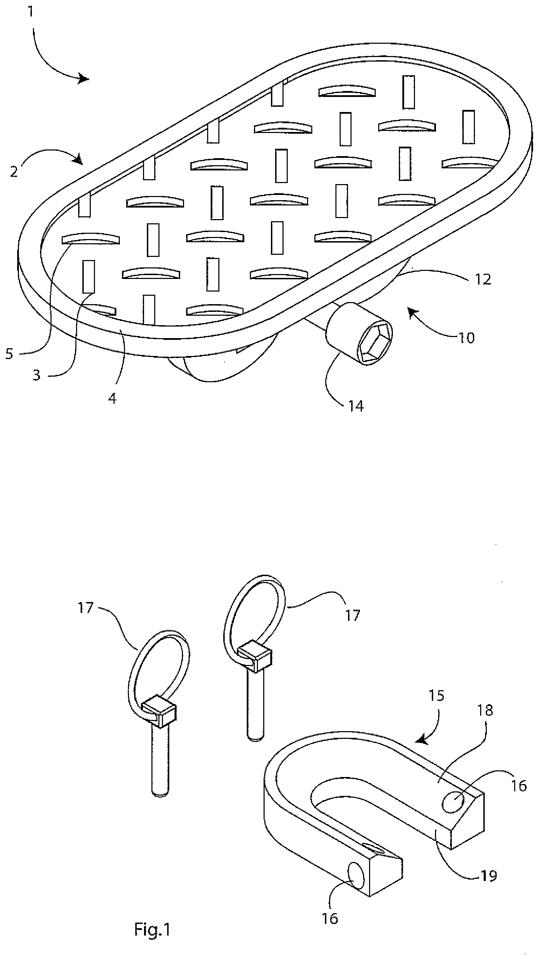

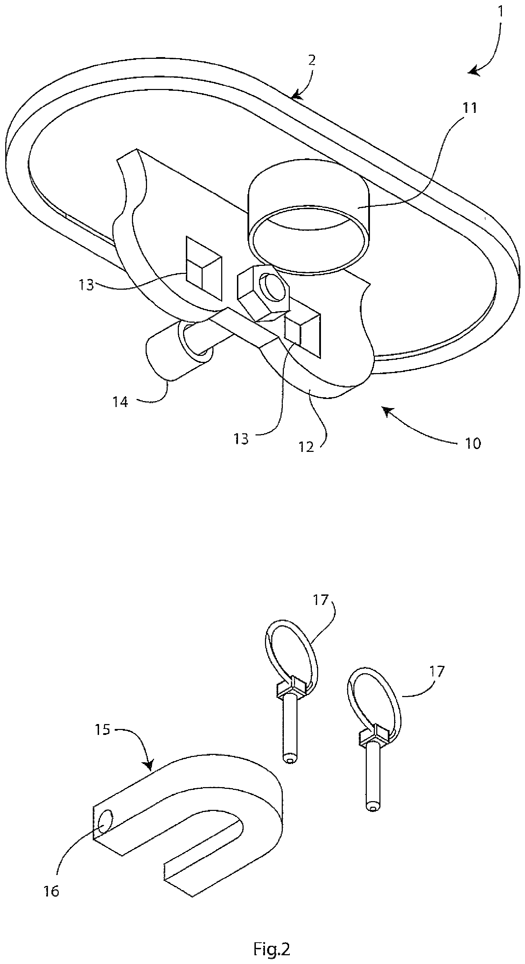

Referring to the drawings a step apparatus 1 for a vehicle comprises a platform 2 made from a plate 3 with a raised border 4 and threads 5 for good grip. The platform 2 is for a person to step onto or stand on, and so in this specification the surface of the platform 2 which is visible in Fig. 1 is referred to as the top and relative locations of other components of the apparatus are accordingly termed. Also, the apparatus front and rear directions are with respect to the direction of travel of a vehicle having a hitch at its rear, to which the apparatus is to be connected. For example, the top right side edge of the platform 2 as viewed in Fig. 2 is the front because a socket 11 is for receiving a ball B of a vehicle hitch is located closest to the rear of the vehicle in use.

An attachment or fastening mechanism 10 of the apparatus 1 allows the apparatus to be mounted to and removed from a ball hitch by a user. It comprises a support plate 12 which extends downwardly with a position in use which is vertical and rearwardly of the socket 11. The mechanism 10 also comprises the socket 11, formed by a short tube extending downwardly from the platform 2 at a location forwardly of the support plate 12.

There is also a U-shaped bracket 15 which is shaped so that its free ends can extend through apertures 13 in the support plate 12. The bracket 15 has holes 16 in the free ends, for receiving locking pins 17. These holes extend at an angle between horizontal and vertical, in this case approximately at 45° between the two. That way, the locking pins 17 have enough space between the ends of the bracket 15 and above the bracket in use for convenient fitting. The bracket 15 has a tapered surface 18 facing up, forming a cradle shape for engaging the underneath of the ball B of a vehicle hitch. There is also an inner vertical surface 19 arranged to engage, in use, the neck N of the hitch.

Finally, the mechanism 10 comprises a bolt 14 threaded through the support plate 12 in a horizontal orientation. This is for final locking of the apparatus onto the hitch.

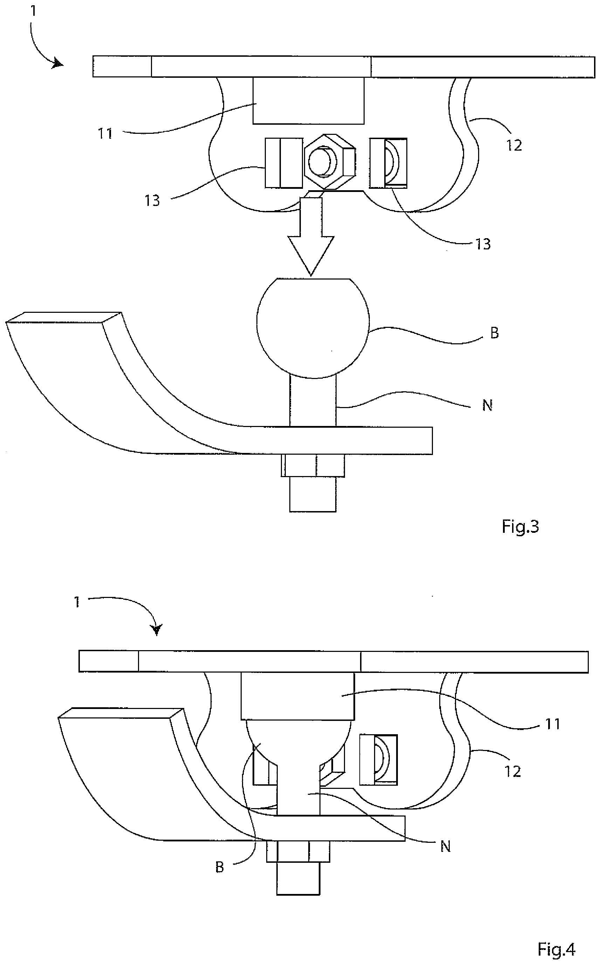

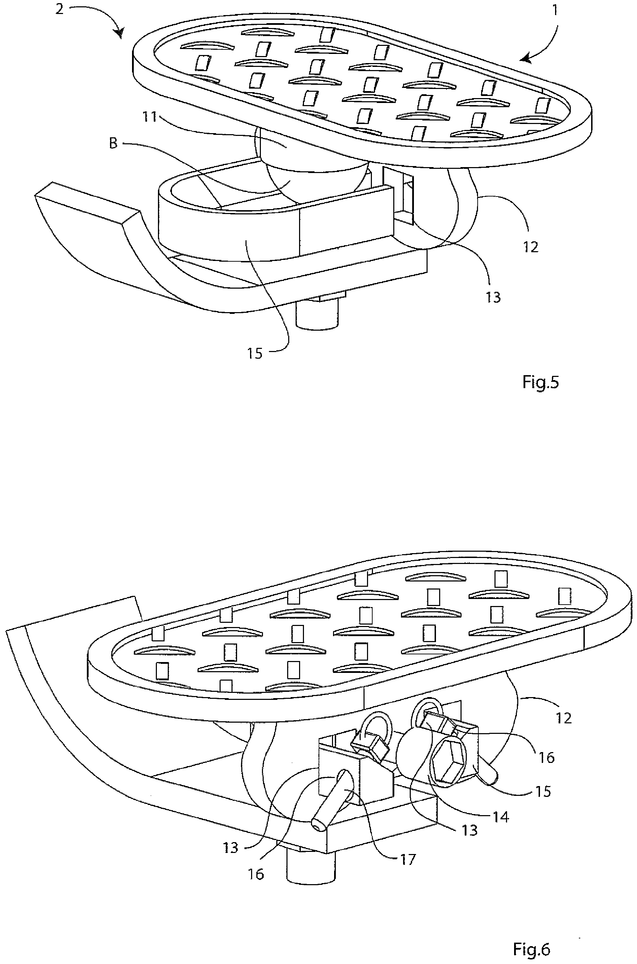

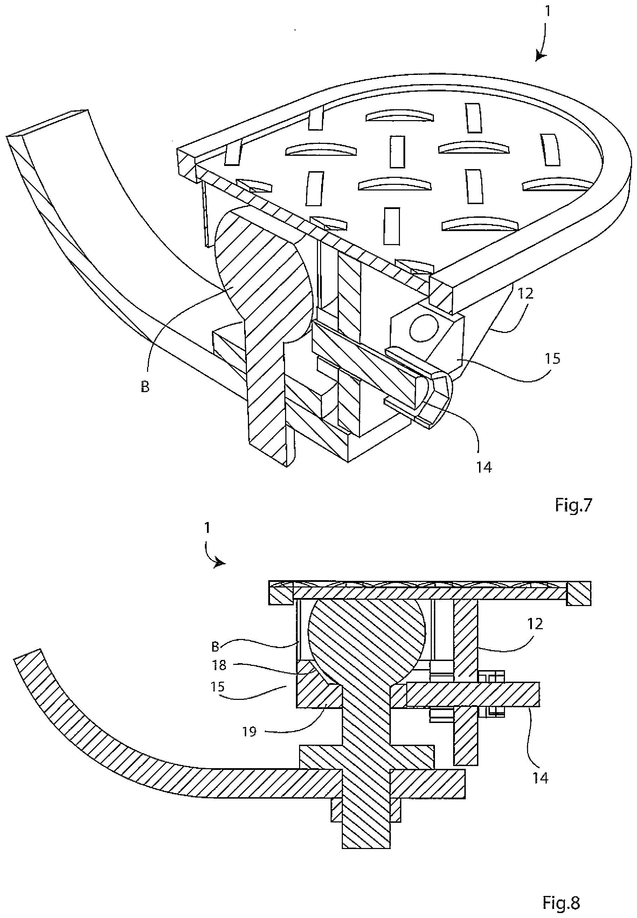

As illustrated in Figs. 4 to 7 the step apparatus 1 is attached to a conventional existing hitch as follows:
(a) The main part of the apparatus is lowered so that the socket 11 engages the ball (B) (Figs. 4, 5).
(b) The bracket 15 is slid horizontally to surround the neck (N) of the hitch below the ball (B), until the free ends extend through the apertures 13, with the tapered surface 18 engaging the lower surface of the ball B and the vertical surface 19 engaging the neck N.
(c) The pins 17 are slid through the apertures 16 to retain the bracket 15 in place. Because the holes 16 are at an angle between vertical and horizontal there is space for the pins 17 beneath the platform 2 and they do not occupy space between the free ends of the bracket, allowing insertion of the bolt 14.
(d) The bolt 14 is rotated using an Allen key until it is tight against the neck (N) to completely fasten the apparatus 1 on the ball (B). This has the effect of pulling the bracket 15 against the ball hitch.

The apparatus may be used as a step for convenient access to the rear of a vehicle such as a van, or it may be used as a standing platform to achieve an elevated view at an event for example. Advantageously, it is not necessary to remove the apparatus immediately after use. It can be left in place between uses, during which time it provides additional safety by presenting a generally convex side edge distal from the vehicle. If a person's leg accidently contacts the apparatus 1 it is less likely to cause injury because their leg is more likely to brush off due to the convex shape. This is in contrast to the situation with a protruding ball hitch, for which side impact can cause injury to the leg, especially the knee.

Of course, the apparatus can be easily removed at any time desired by reversing the procedure (a) to (d) above.

It will be appreciated that it is relatively simple to gain access from in front of the ball to manoeuvre the bracket 15 into position. This can be done in an action which is initially rotation and then rearward sliding (with respect to the direction of the vehicle, the hitch being at the rear of the vehicle).

Once the apparatus 1 is fastened to the hitch it may be used as a step to provide easy access to a vehicle such as a van. This would be particularly convenient for example for delivery where regular and frequent access is required. However it could alternatively be used for personal reasons such as easy access to the rear of an MPV vehicle for sports equipment for example. The apparatus is versatile, being suitable for fastening to any of a range of conventional ball hitches. Because the fastener comprises a plate (12) having apertures (13) to receive the bracket (15) and retain the bracket in place around the neck, it is very simple and universal to use.

Also, because the plate 12 extends downwardly from a lower surface of the platform 2 and extends laterally across the platform 2, it is particularly convenient and effective in use.

In this embodiment, the plate 12 is located approximately mid-way between a front edge of the platform 2 and a rear edge of the platform 2, allowing the socket 11 to receive a hitch ball B forwardly of said plate 12 even if the ball B is close to the vehicles read surface (such as a bumper).

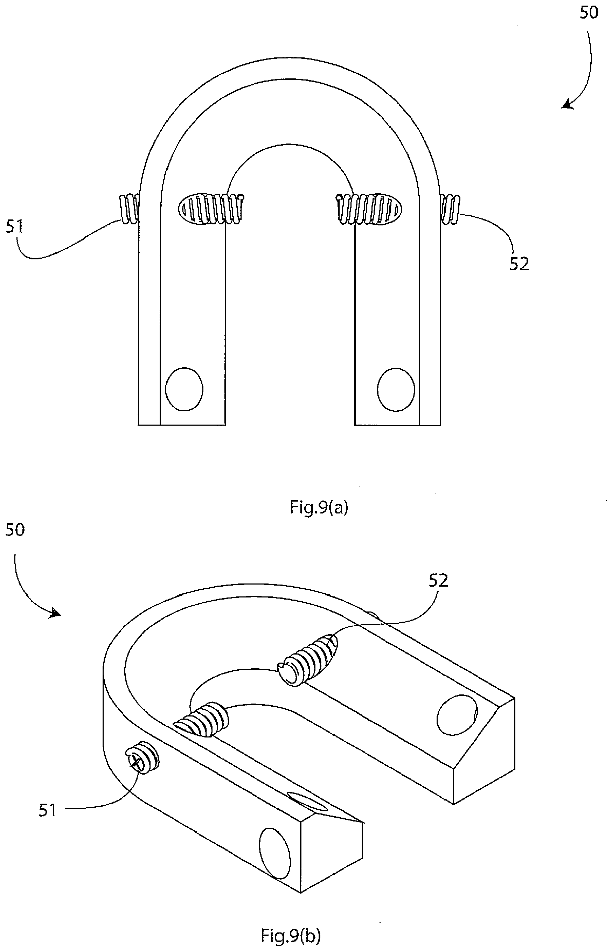

The bracket 15 tapered top surface 18 forms an effective cradle shape suitable to engage the lower surface of a hitch ball (B). The bracket may have top surfaces which have portions which extend in a different laterally inwardly and downwardly provided they are suitable for cradling the lower surface of a hitch ball (B). It may for example be curved. Also, for further adjustment the bracket may have one or more grub screws or other bolts which extend into the space with in the U-shape. An example is shown in Fig. 9, in which a bracket 50 has a pair of adjustment grub screws 51 and 52 which may be rotated to press against the ball hitch to achieve desired centring and lateral fitting of the apparatus. This enhances the universality of the apparatus, allowing it to fit to any known ball hitch known to the inventor. One or more bolts may be used instead of grub screws.

Another advantage is that, with bright painting, the apparatus is more visible than a hitch and it is less likely that a pedestrian will bump into it and cause injury. Also, as noted above, the curved generally convex contour facing rearwardly from the vehicle in use it is less likely to cause injury if a person contacts it.

A major advantage is that the apparatus may be attached to an existing conventional hitch, unlike the prior art.

In other embodiments, the apparatus may have a fastening mechanism which has other fasteners for gripping a hitch ball, possibly with clamps which move laterally to press from the sides. Also, the platform may have a larger surface area, and may therefore be more suitable for standing at an elevated position for viewing a scene such as a sports event.

## Claims

1. A step apparatus (1) comprising:
a platform (2) suitable for stepping on, and
a fastener (11, 15, 10) for attachment to, and removal from, a vehicle ball hitch (B, N), wherein the fastener comprises at least one component (11, 15) configured to grip a ball (B) and at least one component (14, 15) configured to grip a neck (N) of a vehicle hitch, **characterized in that**,
one of said fastener components is a socket (11) to engage the ball (B) at its top, one of said fastener components is a bracket for surrounding part of the neck (N), the fastener comprises a plate (12) having apertures (13) to receive the bracket (15) and retain the bracket in place around the neck, said plate (12) extending downwardly from a lower surface of said platform (2).

2. A step apparatus as claimed in claim 1, wherein said plate (12) extends laterally across the platform (2), and said plate is located approximately mid-way between a front edge of the platform (2) and a rear edge of the platform (2).

3. A step apparatus as claimed in claim 2, wherein said socket (11) is forwardly of said plate (12).

4. A step apparatus as claimed in any preceding claim, wherein the bracket (15) has a top surface (18) which is tapered to form a cradle shape suitable to engage the lower surface of a hitch ball (B).

5. An apparatus as claimed in claim 4, wherein said surface (18) extends laterally inwardly and downwardly, and adjoins a vertical surface (19) suitable for contacting a neck (N) of a hitch ball (B).

6. An apparatus as claimed in any preceding claim, wherein the bracket is U-shaped with open ends, and there are holes (16) extending through the open ends of said U-shaped bracket for receiving locking pins.

7. An apparatus as claimed in claim 6, wherein said holes extend at an angle to the plane of the platform whereby the locking pins do not occupy space between the free ends in use.

8. An apparatus as claimed in any preceding claim, wherein the bracket comprises a bracket body and adjustment elements (51, 52) arranged to move laterally from the bracket body to narrow or widen the distance between opposed sides of the bracket.

9. An apparatus as claimed in claim 8, wherein the adjustment elements comprise grub screws (51, 52) or bolts engaged in the bracket body.

10. A step apparatus as claimed in any preceding claim, wherein the fastener further comprises a bolt (14) for tightening against a hitch.

11. A step apparatus as claimed in claim 10, wherein the fastener (14) comprises a vertical plate (12) through which the bolt extends.

12. A step apparatus as claimed in any preceding claim, wherein the platform (2) has a generally convex shape facing rearwardly.

13. An apparatus as claimed in claim 12, wherein the platform (2) is of general oval shape in plan view.

14. A step apparatus as claimed in any preceding claim, wherein the platform (2) has a raised border (4).

15. A step apparatus as claimed in any preceding claim, wherein the platform (2) is configured to accommodate both feet of a person standing.

## Patentansprüche

1. Trittvorrichtung (1), die Folgendes umfasst:
eine Plattform (2), die dazu geeignet ist, darauf zu steigen, und
eine Befestigung (11, 15, 10), zum Befestigen an und Abnehmen von einer Fahrzeuganhänger-Kugelkupplung (B, N), wobei die Befestigung mindestens eine zum Greifen einer Kugel (B) konfigurierte Komponente (11, 15) und mindestens eine zum Greifen eines Halses (N) einer Fahrzeuganhängerkupplung konfigurierte Komponente (14, 15) umfasst, **dadurch gekennzeichnet, dass**
es sich bei einer der Befestigungskomponenten um eine Buchse (11) handelt, um mit der Kugel (B) an deren Oberseite in Eingriff zu treten, es sich bei einer der Befestigungskomponenten um einen Bügel zum Umgeben eines Teils des Halses (N) handelt, die Befestigung eine Platte (12) mit Aussparungen (13) zum Aufnehmen des Bügels (15) und ortsfesten Halten des Bügels um den Hals umfasst, wobei sich die Platte (12) von einer unteren Oberfläche der Plattform (2) nach unten erstreckt.

2. Trittvorrichtung nach Anspruch 1, wobei sich die Platte (12) in Querrichtung über die Plattform (2) hinweg erstreckt und sich die Platte ungefähr in der Mitte zwischen einer Vorderkante der Plattform (2) und einer Hinterkante der Plattform (2) befindet.

3. Trittvorrichtung nach Anspruch 2, wobei sich die Buchse (11) vor der Platte (12) befindet.

4. Trittvorrichtung nach einem der vorangehenden Ansprüche, wobei der Bügel (15) eine obere Oberfläche (18) aufweist, die schräg ist, um eine Aufnahmeform zu bilden, die geeignet ist, um mit der Unterseite einer Anhängerkupplungskugel (B) in Eingriff zu treten.

5. Vorrichtung nach Anspruch 4, wobei sich die Oberfläche (18) in Querrichtung nach innen und nach unten erstreckt und an eine vertikale Oberfläche (19) angrenzt, die geeignet ist, um mit einem Hals (N) einer Anhängerkupplungskugel (B) in Kontakt zu gelangen.

6. Vorrichtung nach einem der vorangehenden Ansprüche, wobei der Bügel U-förmig mit offenen Enden ist und sich Löcher (16) durch die offenen Enden des U-förmigen Bügels erstrecken, um Sicherungsstifte aufzunehmen.

7. Vorrichtung nach Anspruch 6, wobei sich die Löcher unter einem Winkel zu der Ebene der Plattform erstrecken, wodurch die Sicherungsstifte in Gebrauch keinen Platz zwischen den freien Enden einnehmen.

8. Vorrichtung nach einem der vorangehenden Ansprüche, wobei der Bügel einen Bügelkörper umfasst und Verstellelemente (51, 52) umfasst, die dazu angeordnet sind, sich in Querrichtung von dem Bügelkörper zu bewegen, um den Abstand zwischen gegenüberliegenden Seiten des Bügels zu verengen oder aufzuweiten.

9. Vorrichtung nach Anspruch 8, wobei die Verstellelemente Madenschrauben (51, 52) oder Gewindebolzen umfassen, die sich in dem Bügelkörper im Eingriff befinden.

10. Trittvorrichtung nach einem der vorangehenden Ansprüche, wobei die Befestigung weiter einen Gewindebolzen (14) zum Festziehen an einer Anhängerkupplung umfasst.

11. Trittvorrichtung nach Anspruch 10, wobei die Befestigung (14) eine vertikale Platte (12) umfasst, durch die sich der Gewindebolzen erstreckt.

12. Trittvorrichtung nach einem der vorangehenden Ansprüche, wobei die Plattform (2) eine nach hinten weisende allgemein konvexe Form aufweist.

13. Vorrichtung nach Anspruch 12, wobei die Plattform (2) in der Draufsicht eine allgemein ovale Form aufweist.

14. Trittvorrichtung nach einem der vorangehenden Ansprüche, wobei die Plattform (2) einen erhöhten Rand (4) aufweist.

15. Trittvorrichtung nach einem der vorangehenden Ansprüche, wobei die Plattform (2) dazu konfiguriert ist, beide Füße einer stehenden Person unterzubringen.

## Revendications

1. Appareil marchepied (1) comprenant :
une plateforme (2) adaptée pour monter dessus, et
une fixation (11, 15, 10) pour l'attacher à un attelage à boule de véhicule (B, N), et l'en détacher, dans lequel la fixation comprend au moins une pièce (11, 15) configurée pour agripper une boule (B) et au moins une pièce (14, 15) pour agripper un collet (N) d'un attelage de véhicule, **caractérisé en ce que**,
l'une desdites pièces de fixation est un culot (11) pour entrer en prise avec la boule (B) au niveau de sa partie supérieure,
l'une desdites pièces de fixation est un support pour entourer une partie du collet (N),
la fixation comprend une plaque (12) ayant des ouvertures (13) pour recevoir le support (15) et retenir le support en place autour du collet, ladite plaque (12) s'étendant vers le bas depuis une surface inférieure de ladite plateforme (2).

2. Appareil marchepied selon la revendication 1, dans lequel ladite plaque (12) s'étend latéralement en travers de la plateforme (2), et ladite plaque est située approximativement à mi-chemin entre un bord avant de la plateforme (2) et un bord arrière de la plateforme (2).

3. Appareil marchepied selon la revendication 2, dans lequel ledit culot (11) est vers l'avant de ladite plaque (12).

4. Appareil marchepied selon l'une quelconque des revendications précédentes, dans lequel le support (15) a une surface supérieure (18) qui est effilée pour former une forme de berceau conçue pour entrer en prise avec la surface inférieure d'une boule d'attelage (B).

5. Appareil selon la revendication 4, dans lequel ladite surface (18) s'étend latéralement vers l'intérieur et vers le bas, et est contigüe à une surface verticale (19) conçue pour entrer en contact avec un collet (N) d'une boule d'attelage (B).

6. Appareil selon l'une quelconque des revendications précédentes, dans lequel le support est en forme de U avec des extrémités ouvertes, et il y a des trous (16) s'étendant à travers les extrémités ouvertes dudit support en forme de U pour recevoir des goupilles de verrouillage.

7. Appareil selon la revendication 6, dans lequel lesdits trous s'étendent à un angle par rapport au plan de la plateforme par quoi les goupilles de verrouillage n'occupent pas l'espace entre les extrémités libres pendant l'emploi.

8. Appareil selon l'une quelconque des revendications précédentes, dans lequel le support comprend un corps de support et des éléments d'ajustement (51, 52) agencés pour se déplacer latéralement depuis le corps de support pour rétrécir ou élargir la distance entre les côtés opposés du support.

9. Appareil selon la revendication 8, dans lequel les éléments d'ajustement comprennent des vis sans tête (51, 52) ou des boulons en prise dans le corps de support.

10. Appareil marchepied selon l'une quelconque des revendications précédentes, dans lequel la fixation comprend en outre un boulon (14) pour le serrage contre un attelage.

11. Appareil marchepied selon la revendication 10, dans lequel la fixation (14) comprend une plaque verticale (12) à travers laquelle le boulon s'étend.

12. Appareil marchepied selon l'une quelconque des revendications précédentes, dans lequel la plateforme (2) a une forme généralement convexe orientée vers l'arrière.

13. Appareil selon la revendication 12, dans lequel la plateforme (2) a une forme générale ovale en vue de dessus.

14. Appareil marchepied selon l'une quelconque des revendications précédentes, dans lequel la plateforme (2) a un rebord relevé (4).

15. Appareil marchepied selon l'une quelconque des revendications précédentes, dans lequel la plateforme (2) est configurée pour recevoir les deux pieds d'une personne debout.
